# EUROPÄISCHE PATENTANMELDUNG

(11) **EP 0 618 252 A2**
(43) Veröffentlichungstag der Anmeldung: **05.10.1994**
(21) Anmeldenummer: 94101225.4
(22) Anmeldetag: 28.01.1994
(51) Int. Cl.: C08G 69/42, C08G 69/32, C08G 77/42

(54) **Schäumbare Massen auf Basis von vollaromatischen Polyamiden, geschäumte Formteile und Schichtwerkstoffe**

(30) Priorität: 31.03.1993 DE 4310465
(71) Anmelder: HÜLS AKTIENGESELLSCHAFT, D-45764 Marl (DE)
(72) Erfinder: Wenzel, Markus, Dr., D-45657 Recklinghausen (DE); von der Bey-Dahm, Eva, Dr., D-45721 Haltern (DE); Rau, Norbert, Dr., D-64372 Ober-Ramstadt (DE); Maier, Leonhard, D-63110 Rodgau (DE); Pip, Wolfgang, D-64297 Darmstadt (DE)

(57) **Zusammenfassung**

Die Erfindung betrifft schäumbare Massen auf Basis von vollaromatischen Polyamiden, wobei sie im wesentlichen 4 - 20 Mol-% mindestens difunktionelle Oligosiloxane und 80 - 96 Mol-% aromatische Ausgangskomponenten enthalten, daraus hergestellte geschäumte Formteile und Schichtwerkstoffe ein Verfahren zur Herstellung dieser geschäumten Formteile.

Die erfindungsgemäßen schäumbaren Massen und Schäume auf Basis von vollaromatischen Polyamiden zeichnen sich durch Flammwidrigkeit und geringe Rauchdichten beim Beflammen aus. Sie eignen sich besonders zur Herstellung von Werkstoffen und Formteilen für den Bereich des Personentransports. Die Dicke der Formteile ist über einen weiten Bereich variierbar. Sie ist im wesentlichen abhängig von der verwendeten Form und der eingesetzten Menge des pulverisierten schäumbaren Polyamids.

## Beschreibung

Die Erfindung betrifft schäumbare Massen auf Basis von vollaromatischen Polyamiden, wobei sie im wesentlichen 4 - 20 Mol-% mindestens difunktionelle Oligosiloxane und 80 - 96 Mol-% aromatische Ausgangskomponenten enthalten, daraus hergestellte geschäumte Formteile und Schichtwerkstoffe ein Verfahren zur Herstellung dieser geschäumten Formteile.

Die Verwendung von Polyimid-Vorläufern (US-PSS 4 656 198, 4 709 972, 5 064 867; EP-OSS 184 278, 437 821, 450 505, 466 680) oder Polyamidimid-Vorläufen mit gewöhnlich überwiegendem Anteil an Imidverknüpfungen (EP-OSS 184 278, 205 702, 375 682) ist zur Herstellung von Schaumstoffen bekannt.

Die Herstellung der notwendigen Vorläufer für diese Schäume ist jedoch aufwendig. Sie erfolgt in Lösung und erfordert deshalb nach erfolgten Umesterungs- und Kondensationsreaktionen unter Abspaltung von Alkoholen eine Sprühtrocknung (detailliert z. B. in EP-OS 48 079) oder andere Verfahren zum Entfernen des Lösungsmittels.

Andere Methoden erfordern das Beladen eines polymeren Materials mit flüchtigem Treibmittel, dessen Expandieren beim Aufheizen und Erweichen des Polymeren zum Aufschäumen führt (EP-OSS 186 308, 296 408, 401 664). Diese Verfahren erfordern in der Regel ein Verarbeiten des Materials unter erhöhtem Druck bis zur gewünschten Expansion, in der Regel werden Extruder benötigt.

Solches Beladen kann auch durch Quellen eines Polymeren in Wasser oder einem anderen Lösungsmittel erfolgen, ein Aufschäumen wird dann durch Erhitzen und Vertreiben des Quellungsmittels bewirkt (GB-PS 802 689; US-PS 3 957 936).

Solche Verfahren sind auch mit aus aromatischen Polyamiden bestehenden Fasern durchführbar (US-PSS 3 695 992, 3 760 054). Die verwendeten aromatischen Polyamide werden durch Lösungspolykondensation hergestellt, zu Fasern versponnen, gequollen und dann erhitzt.

Durch Verwendung von ebenfalls aufwendig durch Lösungspolykondensation hergestellten aromatischen N,N-Alkyl-polyamiden entfällt nach US-PSS 3 770 669 und 4 226 949 ein Quellungsschritt. Ein Aufschäumen wird durch Erhitzen des auskondensierten Polymeren - eventuell in Gegenwart eines Katalysators durch Abspaltung der N-Alkylgruppen - erzielt. Herstellung der monomeren N,N'-Dialkylamine wie Lösungspolykondensation sind aufwendig, der Schritt des Verschäumens ist kritisch bezüglich des Ergebnisses: Zu kurzes Erhitzen oder zu geringe Temperatur führen zu unvollständiger Abspaltung der Alkylgruppen und damit zu leicht brennbaren Schäumen, zu hohe Temperatur oder zu langes Erhitzen zum Abbau der Polymerkette.

Weil Erhitzen des auskondensierten Polymeren bei reduzierten Drücken notwendig ist, können nur Schäume mit kleinen Ausdehnungen verschäumt werden.

Ebenfalls aus ungeschäumten Artikeln mit definiertem Feuchtigkeitsgehalt werden nach EP-PS 0 098 938 aromatische Polyamidschäume - besonders m-Phenylenisophthalamidschäume - durch Erhitzen erhalten. Das Verfahren liefert Schaumprodukte mit porösem Innern und glatter Oberfläche. Es eignet sich aufgrund der erreichbaren Dicken von bis zu 10 mm der geschäumten Produkte - hergestellt aus ungeschäumten Polaren Vorläufern bis 3 mm Dicke - zur Herstellung von Folien und Fasern. Schaumkörper größerer Dicken und beliebiger Formen können so nicht erhalten werden.

Es bestand die Aufgabe, schäumbare Massen, daraus hergestellte geschäumte Formteile und Schichtwerkstoffe sowie Verfahren zur Herstellung von geschäumten Formteilen mit guten mechanischen Festigkeiten, die vorteilhaft in größeren Dicken herstellbar sind, zu finden.

Es wurden nun in überraschender Weise schäumbare Massen auf Basis von vollaromatischen Polyamiden gefunden, die im wesentlichen 4 - 20 Mol-% mindestens difuktioneller Oligosiloxane und 80 - 96 Mol-% aromatische Diamine und aromatische Dicarbonsäure enthalten.

Gegenstand der vorliegenden Erfindung sind also schäumbare Massen auf Basis von vollaromatischen Polyamiden, aus diesen Massen hergestellte geschäumte Formteile und Schichtwerkstoffe sowie Verfahren zur Herstellung von geschäumten Formteilen.

Die erfindungsgemäßen schäumbaren Massen enthalten 4 - 20 Mol-% - bezogen auf 100 Mol-% der aromatischen Ausgangskomponenten - mindestens difunktionelle Oligosiloxane der allgemeinen Formel 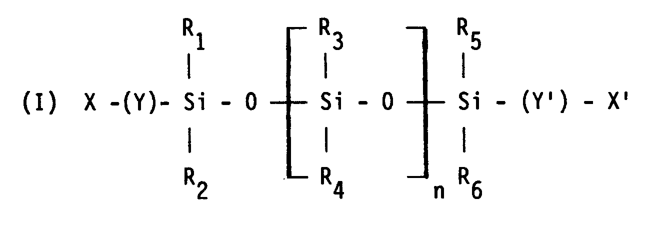
und/oder
(II) statistisch aufgebaute Co-Oligosiloxane bestehend aus 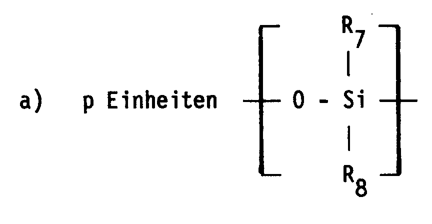 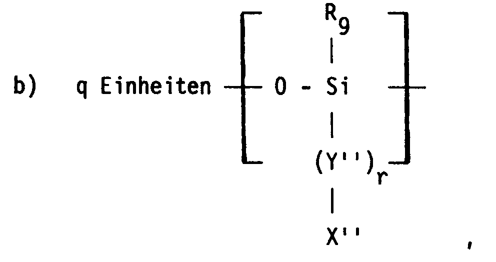
wobei
- R₁ - R₉ gleiche oder verschiedene lineare oder verzweigte Alkyl-, Aralkyl- oder Arylgruppen mit 1 - 8 Kohlenstoffatomen in der Kette, die durch Heteroatome und funktionelle Gruppen wie z. B.
   O, S, 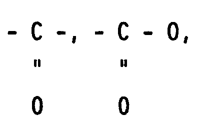 - NH-, -NR-, Halogen, OH, OR unterbrochen bzw. substituiert sein können, und
- X, X' und X'' gleiche oder verschiedene amid- oder imidbildende Gruppen, und
- Y, Y', Y'' eine lineare oder verzweigte Alkyl, Aralkyl oder Arylgruppe mit 1 - 20 Kohlenstoffatomen in der Kette, die durch Heteroatome und funktionelle Gruppen wie z. B.
   O, S, 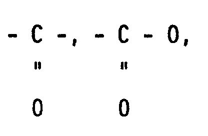 - NH-, -NR-, Halogen, OH, OR unterbrochen bzw. substituiert sein können, bedeuten
- und n und (p + q) die Werte 10 bis 80 darstellen,
- q mindestens 2,
- r gleich 0 oder 1 bedeuten.

Als besonders bevorzugte Oligosiloxane werden α,ω-Diaminopropyl-oligodimethylsiloxane verwendet. Andere Oligosiloxane sind jedoch im Rahmen der Erfindung anwendbar. Die Herstellung dieser mindestens difunktionellen Oligosiloxane ist bekannt. Außerdem sind sie im Handel erhältlich (z. B. TEGOMER®-A-Si, Th. Goldschmidt AG, Germany).

Die vollaromatischen Polyamide sind im Prinzip bekannt (DE-PS 36 09 011). Sie sind aufgebaut aus
1) aromatischen Diaminen der Formel

   H₂N - Ar' - X - Ar'' - Y - Ar'' - X - Ar' - NH₂

   mit
   - Ar', Ar'': = m- oder p-Phenylenrest
   - X: = -O- und Y = -SO₂- oder
   - X: = -SO₂- und Y = -O- oder
   - X: = -O- und Y = -CO- ,
   die bis zu 70 Mol-% durch aromatische Diamine der Formel

   H₂N - Ar ((Z)_{q} - Ar)ᵣ - NH₂

   ersetzt sein können,
   mit
   - Ar: = m-Phenylen, p-Phenylen
   - Z: = gleiche oder verschiedene Reste aus der Gruppe -O-, -S-, -SO₂-, -CO-, -C(CH₃)-
   - q: = 0 oder 1
   - r: = 0, 1 oder 2,
2) und aromatischen Dicarbonsäuren, wobei als aromatische Dicarbonsäuren
   a) Isophthalsäure, die gegebenenfalls bis zu 60 Molprozent durch Terephthalsäure ersetzt sein kann, und wobei beide Säuren ein- oder mehrfach durch folgende Reste substituiert sein können:
      - C(1-6)-Alkyl
      - gegebenenfalls alkyl- oder arylsubstituierter Phenylrest
      - Alkoxyrest mit 1 - 6 C-Atomen
      - Phenoxyreste, wobei der Phenylring wiederum alkyl- oder arylsubstituiert sein kann
      - Halogen, insbesondere Chlor und Brom,
   b) eine Dicarbonsäure der Formel 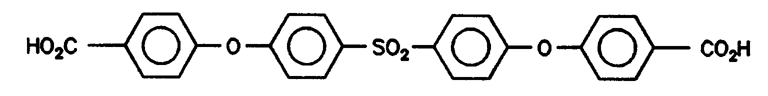
   c) eine Dicarbonsäure der allgemeinen Formel

      HO₂C - Ar - (A - Ar)ₚ - CO₂H

      mit
      - Ar: = m-Phenylen oder p-Phenylen
      - A: = -O-, -S-, -SO₂-, -CO-, und
      - p: = 0 oder 1
   eingesetzt werden.

Als bevorzugte aromatische Diamin-Ausgangskomponente wird 4,4'-Bis(4-aminphenoxy)diphenylsulfon verwendet.

Bevorzugte aromatische Dicarbonsäure-Ausgangskomponenten sind Isophthalsäure und Terepthalsäure. Die aromatischen Dicarbonsäure-Ausgangskomponenten können ganz oder teilweise durch aromatische Tri- oder Tetracarbonsäuren oder deren Anhydride ersetzt werden. Besonders geeignet sind z. B. Pyromellith-, Trimellithsäure oder deren Anhydride, Trimesinsäure, Benzophenontri- oder -tetracarbonsäure oder deren Anhydride oder Naphthalintri- oder -tetracarbonsäure oder deren Anyhdride.

Die Herstellung dieser aromatischen Tri- und Tetracarbonsäuren ist bekannt, außerdem sind sie im Handel erhältlich.

Die erfindungsgemäßen geschäumten Formteile können z. B. so hergestellt werden, daß man zunächst schäumbare Massen in Form eines Präpolymeren herstellt. Dabei wird wie folgt vorgegangen:
Zuerst wird in einem Polykondensationsreaktor bei 230 - 300 °C, vorteilhafter bei 250 - 280 °C, ein oligomeres Material hergestellt. Die dazu benötigte Zeit variiert zwischen 30 Minuten und 12 Stunden. Als Katalysator sind z. B. P-haltige Verbindungen der Formel H₃POₙ mit n = 2, 3 oder 4 in Mengen von 0,01 - 0,5 Gew.-%, bezogen auf die Einsatzstoffe, geeignet. Neben dem Katalysator kann die Monomerenmischung auch Zusatzstoffe , wie z. B. UV- und Wärme-Stabilisatoren, übliche Füllstoffe, hohlkugelförmige Füllstoffe aus Glas oder Kunststoff (Microballoons), Treibmittel, Farbstoffe, oberflächenaktive Substanzen, flammhemmende Mittel, Metallpulver, Leitruß, Kohle-, Glas- oder Aramidfasern enthalten. Manchmal ist es vorteilhafter, derartige Zusätze, z. B. die genannten Fasern oder daraus hergestellte Gewebe oder Vliese oder die flammhemmenden Mittel, erst dem pulverisierten Präpolymer zuzusetzen.

Anschließend wird das so hergestellte Präpolymer pulverisiert und durch Erhitzen auf 250 bis 350 °C aufgeschäumt. Dies kann in der Weise geschehen, daß das schäumbare Pulver zuerst auf 200 bis 280 °C aufgeheizt und bei dieser Temperatur zwischen 15 und 120 Minuten gehalten und danach bei einer Temperatur zwischen 250 und 350 °C weiter polykondensiert wird, wobei während fortschreitender Polykondensation die Masse aufschäumt.

Die Dichte des entstehenden Schaumstoffes hängt von verschiedenen Faktoren ab, von denen sich der Grad der Vorkondensation als der einflußreichste erweist. Der Vorkondensationsgrad ist an der Schmelzviskosität erkennbar. Niedrige Viskositäten ergeben Schaumstoffe niedriger Dichte. Mit zunehmender Viskosität nimmt auch die Schaumstoffdichte zu. Wenn die Viskosität zu niedrig oder zu hoch liegt, ist der Schäumvorgang schwer beherrschbar und man erhält durch Entweichen von Treibgas einerseits oder ungenügende Plastizität andererseits wenig oder gar nicht geschäumte Massen. Durch Erhitzen unter erhöhtem Druck, z. B. in einer druckdicht geschlossenen Hohlform, lassen sich Schaumstoffe mit höherer Dichte als bei Normaldruck herstellen.

Um Schaumstoffe verschiedener Dichten herstellen zu können, stellt man zweckmäßig schäumbare Massen in abgestufter Viskosität her. Zwischenwerte zwischen den Dichtestufen lassen sich durch Abmischen von schäumbaren Massen unterschiedlicher Viskosität in geeigneten Mengenverhältnissen herstellen. Produktionsabfälle des Schaumstoffes können gemahlen und dem pulverisierten Präpolymer zugemischt und mit diesem verschäumt werden, was ebenfalls zur Beeinflussung der Schaumstoffdichte führen kann. Überraschenderweise werden die mechanischen Eigenschaften des Schaumstoffes dadurch nicht beeinträchtigt.

Das Aufschäumen der Masse kann durch Zugabe von üblichen, dem Stand der Technik zu entnehmenden, Hilfsmitteln erfolgen, z. B. unter Zugabe von Treibmitteln wie Estern der Zitronensäure, Tetrazolen, insbesondere Phenyltetrazol, oder Salzen dieser Verbindungen, Porenreglern oder Stabilisatoren.

Die erfindungsgemäßen schäumbaren Massen und Schäume auf Basis von vollaromatischen Polyamiden zeichnen sich durch Flammwidrigkeit und geringe Rauchdichten beim Beflammen aus. Sie eignen sich besonders zur Herstellung von Werkstoffen und Formteilen für den Bereich des Personentransports. Die Dicke der Formteile ist über einen weiten Bereich variierbar. Sie ist im wesentlichen abhängig von der verwendeten Form und der eingesetzten Menge des pulverisierten schäumbaren Polyamids.

Die Erfindung weist gegenüber dem Stand der Technik den Vorteil auf, daß die schäumbaren Massen und Schäume ohne Zusatz von Lösungsmittel und ohne Trocknungsschritte aus der Schmelze herstellbar sind.

Die Verfahrensstufe des Schäumens wird vorzugsweise in zwei oder mehr Schritten durchgeführt. Das schäumbare Material kann in einem ersten Schritt zu einem teilweise geschäumten Granulat vorgeschäumt und dieses im letzten Schritt in einer Hohlform ausgeschäumt werden. Bei der Herstellung kompliziert gestalteten Schaumstoff-Formkörpern ist es zweckmäßig, das Material beim ersten Schritt in einer Hohlform vorzuschäumen, deren Hohlraum kleiner als derjenige der Hohlform des letzten Schäumungsschrittes ist. In der ersten Hohlform entsteht ein Vorformling, der der Gestalt des herzustellenden Formkörpers bereits angenähert ist und der in der größeren Hohlform des letzten Schäumschrittes seine endgültige Gestalt annimmt. Erforderlichenfalls kann die Aufschäumung auch in mehr als zwei stufenweise größer werdenden Hohlformen durchgeführt werden. Ebenso kann man mehrere Vorformlinge in einer größeren Hohlform weiter- oder ausschäumen, wobei sie sich zu einem Formteil verbinden.

Gemäß einer bevorzugten Ausführungsform wird das schäumbare Material in Berührung mit wenigstens einer Deckschicht in der Weise aufgeschäumt, daß sich der entstehende Schaumstoff unter dem Schäumdruck mit der Deckschicht haftend verbindet. Beispielsweise kann eine Schicht des schäumbaren Materials oder des daraus hergestellten vorgeschäumten Granulats zwischen zwei Deckschichten unter Bildung eines Schichtwerkstoffes mit einer Kernschicht aus dem Schaumstoff aufgeschäumt werden. Zur Herstellung eines ausgesteiften Profilstabes mit einer harten Außenwand kann das schäumbare Material oder das vorgeschäumte Granulat in ein Rohr oder einen Schlauch aus dem Deckschichtmaterial gefüllt und unter Bildung eines Stranges mit einem Kernstrang aus dem Schaumstoff aufgeschäumt werden. Um eine haftende Verbindung des entstehenden Schaumstoffes mit der Deckschicht und eine definierte Gestalt zu erreichen, ist es zweckmäßig, wenn die Aufschäumung in einer Hohlform durchgeführt wird.

Als Deckschicht eignen sich flächige feste Werkstoffe, die zusammen mit dem entstehenden Schaumstoffkern einen steifen Schichtwerkstoff für konstruktive Zwecke, z. B. im Fahrzeugbau, ergeben. Geeignet sind Bleche, Pappe, Papiere, Hartfaserplatten, Kunststoffplatten oder -folien, sowie Gewebe oder Vliese, in welche das aufschäumende Präpolymer eindringen kann, so daß eine faserverstärkte Oberfläche entsteht.

Ein bevorzugtes Deckschichtmaterial sind Gewebe oder Vliese aus organischen oder anorganischen Fasern, die mit einem bei der Schäumtemperatur plastischen, gegebenenfalls aushärtenden und beim Abkühlen erstarrenden Harz imprägniert sind. Sie werden allgemein als "Prepregs" bezeichnet und können duroplastische oder thermoplastische Kunstharze enthalten, die sich mit dem Schaumstoffkern haftend verbinden.

Die nachfolgenden Beispiele sollen die Erfinung näher erläutern:

### Beispiel 1

205,44 g ( 0,475 Mol) 4,4'-Bis-(4-aminophenoxy)-diphenylsulfon
74,76 g (0,450 Mol) Isophtalsäure
10,91 g (0,050 Mol) Pyromellithsäuredianhydrid
58,00 g (0,025 Mol) α,ω-Diaminoppropyl-oligodimethylsiloxan mit n ≈ 30
Die Einsatzstoffe wurden mit 168 µl 85%iger wäßriger Phosphorsäure in einem mit Destillationsbrücke und Stickstoffzuführung ausgerüsteten Polykondensationsreaktor unter Schutzgas bei 230 °C aufgeschmolzen. Die Schmelze wurde 30 Min. bei dieser Temperatur und weitere 30 Min. bei 280 °C gerührt, entstandendes Reaktionswasser wurde abdestilliert. Nach Erkalten wurde die spröde erstarrte Schmelze pulverisiert und gesiebt.

Der J-Wert (DIN 53 728, Teil 3) des gelben Produkts, gemessen in Phenol/o-Dichlorbenzol (1 : 1) betrug 23 cm³/g.

Das Pulver wurde in eine offene Blechschale gefüllt und unter Schutzgasatmosphäre zunächst auf 250 °C, nach 30 Min. auf 300 °C und schließlich auf 320 °C geheizt. Diese Temperatur wurde für 120 Min. gehalten.

Während der unter diesen Bedingungen fortschreitenden Polykondensation entstand der erfindungsgemäße Schaum. Die Rohdichte ρ betrug 200 kg/m³. Die Dicke des so hergestellten Schaumkörpers war 10 cm.

### Beispiel 2

205,44 g ( 0,475 Mol) 4,4'-Bis-(4-aminophenoxy)-diphenylsulfon
83,07 g (0,500 Mol) Isophtalsäure
12,95 g (0,015 Mol) α,ω-Diaminoppropyl-oligodimethylsiloxan mit n ≈ 10
Die Herstellung des Vorkondensats erfolgte analog der Vorschrift von Beispiel 1. Es entstand ein Präpolymer mit einer Viskositätszahl von J = 15 cm³/g und daraus ein Schaum mit ρ = 150 kg/m³ und einer Dicke von ca. 10 cm.

### Beispiel 3

205,44 g ( 0,475 Mol) 4,4'-Bis-(4-aminophenoxy)-diphenylsulfon
59,81 g (0,360 Mol) Isophtalsäure
14,95 g (0,090 Mol) Terephthalsäure
10,51 g (0,05 Mol) Trimesinsäure
124,07 g (0,025 Mol) α,ω-Diaminoppropyl-oligodimethylsiloxan mit n ≈ 60
Bei der Herstellung wurde nach der Vorschrift von Beispiel 1 verfahren. Es entstand ein hellgraues Vorprodukt mit J = 21 cm³/g, sowie ein Schaum mit ρ = 130 kg/m³ und der Dicke von ca. 10 cm.

## Patentansprüche

1. Schäumbare Massen auf Basis von vollaromatischen Polyamiden,
dadurch gekennzeichnet,
daß 4 bis 20 Mol-% mindestens difunktionelle Oligosiloxane und 80 bis 96 Mol-% aromatische Ausgangskomponenten enthalten sind.

2. Schäumbare Massen nach Anspruch 1,
dadurch gekennzeichnet,
daß sie Oligosiloxane der allgemeinen Formel 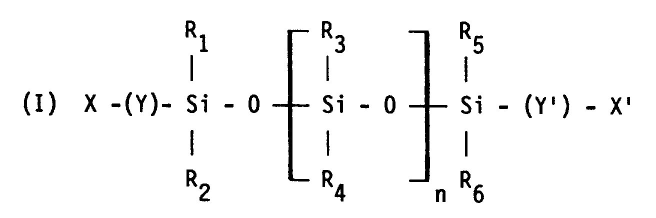 und/oder
(II) statistisch aufgebaute Co-Oligosiloxane bestehend aus 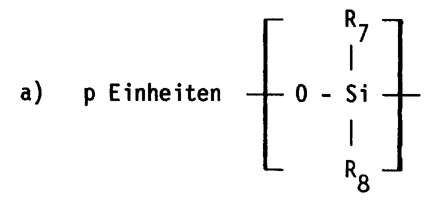 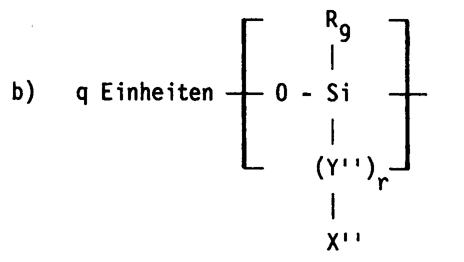 enthalten, wobei
- R₁ - R₉ gleichzeitig oder unabhängig voneinander eine lineare oder verzweigte Alkyl-, Aralkyl- oder Arylgruppe mit 1 - 8 Kohlenstoffatomen in der Kette, die durch Heteroatome und funktionelle Gruppen wie z. B.
O, S, 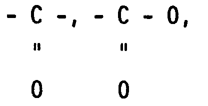 - NH-, -NR-, Halogen, OH, OR unterbrochen bzw. substituiert sein können, und
- X, X' und X'' gleichzeitig oder unabhängig von einander eine amid- oder imidbildende Gruppe, und
- Y, Y', Y'' eine lineare oder verzweigte Alkyl, Aralkyl oder Arylgruppe mit 1 - 20 Kohlenstoffatomen in der Kette, die durch Heteroatome und funktionelle Gruppen wie z. B.
O, S, 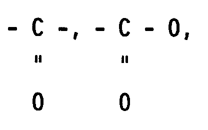 - NH-, -NR-, Halogen, OH, OR unterbrochen bzw. substituiert sein können, bedeuten
- und n und (p + q) die Werte 10 bis 80 darstellen,
- q mindestens 2,
- r gleich 0 oder 1 bedeuten.

3. Schäumbare Massen nach Anspruch 1 und 2,
dadurch gekennzeichnet,
daß α,ω-Diaminopropyl-oligodimethylsiloxane verwendet werden.

4. Schäumbare Massen nach mindestens einem der Ansprüche 1 bis 3,
dadurch gekennzeichnet,
daß die vollaromatischen Polyamide
1) aus aromatischen Diaminen der Formel
H₂N - Ar' - X - Ar'' - Y - Ar'' - X - Ar' - NH₂
mit
Ar', Ar'' = m- oder p-Phenylenrest
X = -O- und Y = -SO₂- oder
X = -SO₂- und Y = -O- oder
X = -O- und Y = -CO- ,
die bis zu 70 Mol-% durch aromatische Diamine der Formel
H₂N - Ar ((Z)_{q} - Ar)ᵣ - NH₂
ersetzt sein können,
mit
Ar = m-Phenylen, p-Phenylen
Z = gleiche oder verschiedene Reste aus der Gruppe -O-, -S-, -SO₂-, -CO-, -C(CH₃)-
q = 0 oder 1
r = 0, 1 oder 2, und
2) aus aromatischen Dicarbonsäuren aufgebaut sind, wobei als aromatische Dicarbonsäuren
a) Isophthalsäure, die gegebenenfalls bis zu 60 Molprozent durch Terephthalsäure ersetzt sein kann, und wobei beide Säuren ein- oder mehrfach durch folgende Reste substituiert sein können:
- C(1-6)-Alkyl
- gegebenenfalls alkyl- oder arylsubstituierter Phenylrest
- Alkoxyrest mit 1 - 6 C-Atomen
- Phenoxyreste, wobei der Phenylring wiederum alkyl- oder arylsubstituiert sein kann
- Halogen, insbesondere Chlor und Brom,
b) eine Dicarbonsäure der Formel 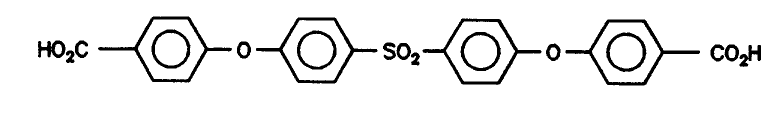
c) eine Dicarbonsäure der allgemeinen Formel
HO₂C - Ar - (A - Ar)ₚ - CO₂H
mit
Ar = m-Phenylen oder p-Phenylen
A = -O-, -S-, -SO₂-, -CO-, und
p = 0 oder 1
eingesetzt werden.

5. Schäumbare Massen nach mindestens einem der Ansprüche 1 bis 4,
dadurch gekennzeichnet,
daß als aromatische Dicarbonsäure Isophthalsäure verwendet wird.

6. Schäumbare Massen nach mindestens einem der Ansprüche 1 bis 5,
dadurch gekennzeichnet,
daß als aromatisches Diamin 4,4'-Bis(4-aminophenoxy)diphenylsulfon verwendet wird.

7. Schäumbare Massen nach mindestens einem der Ansprüche 1 bis 6,
dadurch gekennzeichnet,
daß als aromatische Dicarbonsäure-Ausgangskomponenten teilweise oder vollständig durch aromatische Tri- oder Tetracarbonsäuren oder deren Anhydride verwendet werden.

8. Schäumbare Massen nach Anspruch 7,
dadurch gekennzeichnet,
daß Pyromellith-, Trimellithsäure oder deren Anhydride, Trimesinsäure, Benzophenontri- oder -tetracarbonsäure oder deren Anhydride oder Naphthalintri- oder -tetracarbonsäure oder deren Anhydride verwendet werden.

9. Geschäumte Formteile, hergestellt aus schäumbaren Massen nach mindestens einem der Ansprüche 1 bis 9.

10. Verfahren zur Herstellung von geschäumten Formteilen nach Anspruch 9,
dadurch gekennzeichnet,
daß die schäumbare Masse gemäß einem oder mehreren der Ansprüche 1 bis 8 auf eine Temperatur von 250 bis 350 °C erhitzt wird.

11. Verfahren zur Herstellung von geschäumten Formteilen nach Anspruch 10,
dadurch gekennzeichnet,
daß die schäumbaren Massen in Form eines Präpolymeren zunächst pulverisiert werden und anschließend
a) zuerst auf 230 - 280 °C aufgeheizt und bei dieser Temperatur zwischen 15 und 120 min. gehalten werden,
b) und danach auf eine Temperatur zwischen 250 und 350 °C weiter polykondensiert werden, wobei während fortschreitender Polykondensation die Formmasse aufschäumt.

12. Verwendung der geschäumten Formteile, hergestellt aus schäumbaren Massen nach mindestens einem der Ansprüche 1 bis 11, als Leichtbauelemente, insbesondere für Einrichtungen des Personentransports.

13. Verfahren nach Anspruch 10,
dadurch gekennzeichnet,
daß die Verfahrensstufe des Schäumens in mindestens zwei Schritten durchgeführt wird, wobei das schäumbare Material im ersten Schritt vorgeschäumt und im letzten Schritt in einer Hohlform ausgeschäumt wird.

14. Verfahren nach Anspruch 13,
dadurch gekennzeichnet,
daß das Material beim ersten Schritt in einer Hohlform vorgeschäumt wird, deren Hohlraum kleiner als derjenige der Hohlform des letzten Schäumungsschrittes ist.

15. Verfahren nach Anspruch 13,
dadurch gekennzeichnet,
daß das Material beim ersten Schritt zu einem Granulat vorgeschäumt und das Granulat im letzten Schäumschritt in einer Hohlform ausgeschäumt wird.

16. Verfahren nach Anspruch 10,
dadurch gekennzeichnet,
daß das schäumbare Material in Berührung mit wenigstens einer Deckschicht in der Weise aufgeschäumt wird, daß sich der entstehende Schaumstoff unter dem Schäumdruck mit der Deckschicht haftend verbindet.

17. Verfahren nach Anspruch 16,
dadurch gekennzeichnet,
daß eine Schicht des schäumbaren Materials zwischen zwei Deckschichten unter Bildung eines Schichtwerkstoffes mit einer Kernschicht aus dem Schaumstoff aufgeschäumt wird.

18. Verfahren nach Anspruch 16,
dadurch gekennzeichnet,
daß das schäumbare Material oder ein daraus hergestelltes vorgeschäumtes Granulat in ein Rohr oder einen Schlauch aus dem Deckschichtmaterial gefüllt und unter Bildung eines Stranges mit einem Kernstrang aus dem Schaumstoff aufgeschäumt wird.

19. Verfahren nach einem oder mehreren der Ansprüche 16 bis 18,
dadurch gekennzeichnet,
daß das Material der Deckschicht ein Gewebe oder Vlies aus organischen oder anorganischen Fasern und ein bei der Schäumtemperatur plastisches, gegebenenfalls aushärtendes und beim Abkühlen erstarrendes Harz enthält.

20. Verfahren nach einem oder mehreren der Ansprüche 16 bis 19,
dadurch gekennzeichnet,
daß die Aufschäumung in einer Hohlform durchgeführt wird.

21. Schichtwerkstoff aus einer geschäumten Kernschicht und wenigstens einer damit haftend verbundenen Deckschicht,
dadurch gekennzeichnet,
daß die Kernschicht aus einer schäumbaren Masse gemäß mindestens einem der Ansprüche 1 bis 8 hergestellt ist.

22. Schichtwerkstoff nach Anspruch 21,
dadurch gekennzeichnet,
daß die Deckschicht aus einem faserverstärkten duroplastischem oder thermoplastischem Kunststoff besteht.
